Europäisches Patentamt

European Patent Office

Office européen des brevets

(11) Numéro de publication: **0 367 744 B1**

# FASCICULE DE BREVET EUROPEEN

(45) Date de publication de fascicule du brevet: **14.06.95**

(51) Int. Cl.⁶: **A01K 13/00**, A47K 7/03, C11D 1/44

(21) Numéro de dépôt: **89870149.5**

(22) Date de dépôt: **09.10.89**

(54) **Support pour nettoyer des animaux à poils, produit et procédé de nettoyage d'animaux à poils.**

(30) Priorité: **10.10.88 LU 87362**

(43) Date de publication de la demande:
**09.05.90 Bulletin 90/19**

(45) Mention de la délivrance du brevet:
**14.06.95 Bulletin 95/24**

(84) Etats contractants désignés:
**AT BE CH DE ES FR GB IT LI NL SE**

(56) Documents cités:
EP-A- 0 068 516    DE-A- 2 434 342
DE-A- 3 507 698    FR-A- 442 302
FR-A- 2 271 808    FR-A- 2 538 238
US-A- 4 323 656

(73) Titulaire: **ITEMA S.A.**
**51 boulevard Dr. Charles Marx**
**L-2130 Luxembourg (LU)**

(72) Inventeur: **Denissenko, Serge**
**Rue Georges Bizet, 1**
**F-86440 Migné-Auxances (FR)**

(74) Mandataire: **Vanderperre, Robert et al**
**Bureau Vander Haeghen S.A.**
**Rue Colonel Bourg 108 A**
**B-1040 Bruxelles (BE)**

EP 0 367 744 B1

## Description

La présente invention a pour objet un produit nettoyant, un procédé de nettoyage d'animaux à poils et un gant ou moufle pour la mise en oeuvre de ce procédé.

Le procédé suivant l'invention est spécialement destiné pour le toilettage, c'est-à-dire le nettoyage d'animaux de compagnie ou d'appartement, en particulier pour les chiens.

On connaît par le document EP-A-0 068 516 pui montre les caractéristiques des préambules des revendications 1 et 20, une serviette contenant une composition de nettoyage comprenant 10 % en poids de substance anionique et 5 % en poids de substance non ionique et par le document FR-A-2 271 808 un article de toilette de bain ou douche contenant moins de 10 % en poids de substances tensio-actives mais ne contenant pas de substances amphotériques.

Par les documents US-A-4 323 656, FR-A-2 538 238 et DE-A-2 434 342 on connaît des supports tels qu'éponges, serviettes ou gants contenant un savon ou autres substances de nettoyage.

Tous ces documents ne décrivent un produit nettoyant contenant de 0,05 à 10 % en poids de substances tensio-actives et se présentant sous la forme d'une composition aqueuse contenant une substance tensio-active non ionique, une substance tensio-active amphotérique et éventuellement une substance tensio-active cationique, produit permettant d'obtenir un meilleur nettoyage et un meilleur lustré du pelage d'animaux par rapport aux nettoyage et lustre obtenus en utilisant des compositions connues.

Des procédés de nettoyage de chiens sont également connus.

On connaît ainsi un procédé de nettoyage de chiens utilisant des shampooings. Dans ce procédé connu, on mouille le pelage de l'animal avec de l'eau, ensuite on répand le shampooing liquide en fin filet sur les poils du chien de manière à obtenir une mousse abondante en frottant.

On rince les poils du chien à l'eau et on répète cette opération une ou deux fois.

Ensuite on sèche éventuellement les poils à l'aide d'un linge.

Ce procédé présente de nombreux inconvénients, à savoir :
- des difficultés de maintenir l'animal en place ;
- des rinçages abondants ;
- des ébrouages fréquents et prolongés de l'animal en particulier lors de l'obtention de mousse, et
- une durée de nettoyage importante.

De plus, de tels lavages d'animaux de compagnie, effectués tant bien que mal, ne peuvent être répétés à intervalles rapprochés, en raison de la forte élimination des corps gras -jugés protecteurs- qui se trouvent sur leur peau et surtout sur leur pelage, élimination due à l'action des divers agents tensio-actifs utilisés dans les shampooings.

On connaît également un procédé de nettoyage de chiens à l'aide de shampooings en poudre.

Dans ce procédé, on répand la poudre sur le corps du chien, on frictionne énergiquement l'animal, on laisse la poudre agir et enfin on élimine la poudre en brossant les poils de l'animal.

Ce procédé présente également de nombreux inconvénients, par exemple :
- une durée de nettoyage importante ;
- une élimination incomplète du shampooing en poudre ;
- la production de poussières ;
- la nécessité de brosser énergiquement les poils du chien pour éviter que l'aspect desdits poils ne reste terne.

La présente invention est donc relative à un produit mettoyent permettant de nettoyer rapidement et facilement des animaux à poils sans apport d'eau de rinçage, sans ébrouage ou production de poussières. Ce produit est destiné à être appliqué sur un support pour nettoyer des animaux à poils qui présente au moins une partie capable de libérer le produit nettoyant destiné à détacher, émulsionner ou dissoudre des salissures présentes sur des poils de manière à amener ces salissures dans un état permettant de les éliminer sur un support absorbant ou adsorbant.

Le produit nettoyant suivant l'invention est une composition aqueuse contenant une substance tensio-active non ionique, une substance tensio-active amphotérique et eventuellement une substance tensio-active cationique, la teneur en substances tensio-active dans la composition étant de 0,05 à 10 % en poids.

Le produit nettoyant suivant l'invention contient également de 0,05 à 30 % d'adjuvants, ces adjuvants étant, de préférence, choisis parmi des :
- parfums,
- solvants,
- microbicides,
- fongicides,
- insecticides,

2

- agents anti-statiques,
- agents démêlants,
- agents lustrants,
- agents revitalisants dermiques et capillaires.

Les solvants préférés sont l'éthanol, l'isopropanol, le monopropylèneglycol-monométhyléther et leurs mélanges, la quantité de solvant(s) étant avantageusement comprise entre 18 et 28 % en poids.

La présente invention est également relative à un procédé de nettoyage d'animaux à poils, en particulier un procédé de toilettage, dans lequel on frotte les poils à nettoyer au moyen d'un support libérant un produit nettoyant suivant l'invention destiné à détacher, émulsionner ou dissoudre des salissures présentes sur les poils et dans lequel on frotte ensuite lesdits poils au moyen d'un support absorbant ou adsorbant de manière à éliminer lesdites salissures.

D'autres particularités et détails de l'invention ressortiront de la description détaillée suivante dans laquelle il est fait référence aux dessins ci-annexés.

Dans ces dessins :

- la figure 1 est une vue en perspective d'une première forme de réalisation d'une moufle suivant l'invention,
- la figure 2 est une vue en perspective d'une deuxième forme de réalisation d'un gant suivant l'invention, et
- la figure 3 est une vue en perspective, partiellement en coupe d'une troisième forme de réalisation d'un gant suivant l'invention.

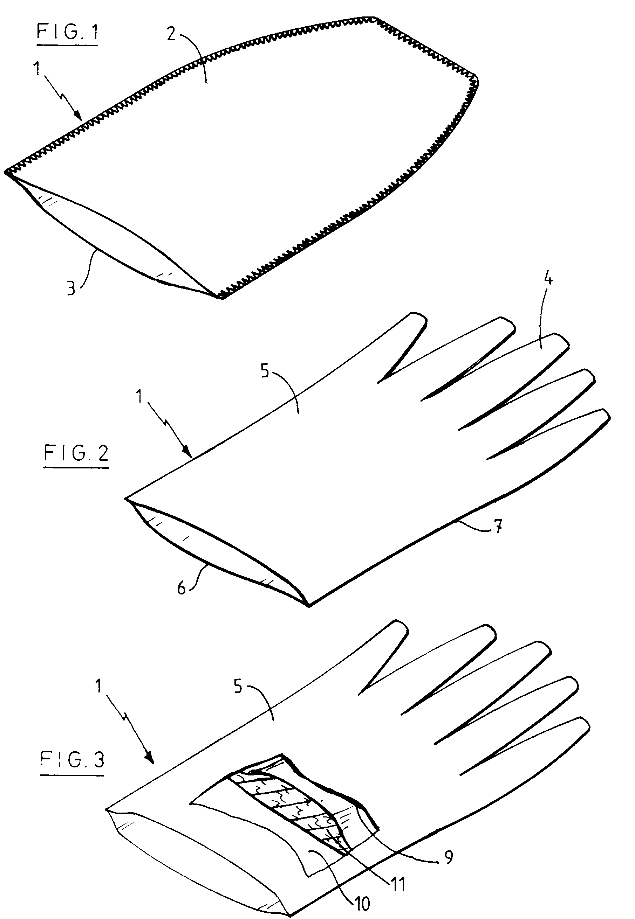

La figure 1 montre un support 1 pour nettoyer des animaux à poils par frottement ou glissement dudit support sur les poils à nettoyer. Il comprend une partie 2 capable de libérer au moins un produit nettoyant destiné à détacher, émulsionner ou dissoudre des salissures présentes sur des poils et une partie 3 capable d'absorber ou d'adsorber des salissures.

Ce support 1 a la forme d'une moufle destinée à recouvrir une main d'un opérateur.

Cette moufle 1 comprend une face supérieure 2 capable de libérer un produit nettoyant et une face inférieure 3 destinée à absorber ou adsorber des salissures.

Les faces 2, 3 sont réalisées en papier, papier déployé, tissu, textile ou en toute autre matière absorbante et résistant au frottement à l'état humide, cette matière présentant, de préférence, un réseau de fibres.

La figure 2 montre un support 1 similaire à celui représenté à la figure 1, si ce n'est que le support 1 épouse correctement la forme d'une main. Ce support 1 présente des doigts 4 de manière à permettre un nettoyage plus efficace des poils de la tête, des pattes ou des oreilles d'un animal.

Ce support 1 est constitué de deux faces 5,6, liées l'une à l'autre, par exemple par couture, sur leur pourtour 7, hormis un espace 8 permettant de placer ledit support sur une main.

Les faces 5,6 du support 1 sont, au moins partiellement, à la fois capables de libérer au moins un produit nettoyant et capable d'absorber ou adsorber des salissures.

La figure 3 montre un support 1 similaire à celui représenté à la figure 2 si ce n'est que la face 5 du support 1 est constituée de deux feuilles 9,10 entre lesquelles s'étend au moins une couche 11 destinée à contenir un produit nettoyant.

D'autres formes de réalisation de supports sont possibles. Ainsi, au lieu d'avoir la forme d'un gant ou d'une moufle, le support 1 peut avantageusement prendre la forme d'une partie d'une main, en particulier celle d'un doigt.

Enfin, selon une autre forme de réalisation, seule une face du gant ou moufle est capable de libérer un produit nettoyant et d'absorber ou d'adsorber des salissures.

Le produit nettoyant ou de nettoyage suivant l'invention destiné à être appliqué sur un support pour nettoyer des animaux à poils est une composition aqueuse contenant une substance tensio-active non ionique, une substance tensio-active amphotérique et eventuellement une substance tensio-active cationique, la teneur en substances tensio-actives dans la composition étant de 0,05 à 10% en poids.

Parmi les substances tensioactives non ioniques, on peut citer par exemple les produits de condensation d'un oxyde d'alkylène sur les alkylphénols, sur les alcools gras à poids moléculaire élevé, sur les acides gras, sur les amides gras.

Les tensioactifs non ioniques du types oxydes d'amines grasses tels que les oxydes d'alkyldiméthylamine et les oxydes d'alkyl-amidopropyldiméthylamine sont avantageux.

Parmi les tensioactifs cationiques, on peut citer par exemple les halogénures et les méthyl- ou méthoxy-sulfates de monométhyltrialkylammonium, de diméthyldialkylammonium, de triméthylmonoalkylammonium, de diméthyl-alkyl-benzylammonium, de dialkyl-méthylbenzylammonium, les dérivés d'imidazolinium et les complexes diquaternaires tels que les dihalogénures d'alkyl-pentaméthyl-propane-diammonium et les chlorhydrates, nitrates, sulfates, acétates et gluconates de 1,6-di-(4-chlorophényldiguanido)-hexane.

Quelques exemples de tensioactifs amphotériques sont :
- les dérivés de l'acide N-alkyl-aminobutyrique,
- les dérivés de l'acide alkyl-amino-propionique,
- les dérivés du type bétaïnique, tels que les alkylbétaïnes, les alkyl-amido-bétaïnes, les diméthyl-alkyl-amino-bétaïnes, les amopholytes à base imidazoline.

A titre d'exemples, on peut citer les sels de sodium de l'acide N-alkyl-aminobutyrique et les sels de potassium de l'acide alkyl-amino-propionique.

Le produit nettoyant ou de nettoyage est avantageusement également un produit d'assainissement.

Le produit de nettoyage et d'assainissement selon l'invention peut contenir en outre environ 0,05 à 30 % en poids d'un ou de plusieurs adjuvants choisis, par exemple, parmi les groupes suivants :
- parfums,
- solvants,
- microbicides,
- fongicides,
- insecticides,
- agents anti-statiques,
- agents démêlants,
- agents adoucissants,
- agents lustrants,
- agents revitalisant dermiques et capillaires.

Les adjuvants que peut contenir le produit de nettoyage et d'assainissement selon l'invention peuvent indifféremment être solubles dans l'eau ou être constitués par des particules insolubles mais dispersées de façon homogène et stable dans la solution aqueuse du (ou des) tensioactif(s).

Les solvants cités parmi les adjuvants sont de préférence choisis parmi les groupes suivants :
- les composés hydroxylés aliphatiques, tels qu'éthanol et isopropanol ;
- les éthers (mono- et di-éthers).

L'impregnation du support par le produit de nettoyage et d'assainissement peut être réalisée par pulvérisation, dépôt en surface puis répartition par capillarité, trempage puis essorage, ou par tout autre procédé, pourvu que la répartition du liquide dans le support se réalise d'une manière parfaitement homogène.

A titre d'exemples particuliers de produits contenus dans le produit nettoyant ou de nettoyage, on peut citer :
- comme tensioactifs, l'oxyde de dodécyl-amidopropyl-diméthylamine vendu sous le nom de Aminoxid WS 35 par GOLDSCHMIDT (Allemagne), l'acide dodécylaminopropyl N-diméthyl-aminoacétique vendu sous le nom Tegobetain L 10 par GOLDSCHMIDT (Allemagne), le chlorure d'acétyl-diméthyl-dodécylammonium (sel de sodium) vendu sous le nom Amphosol DMC/MCA par STEPAN (U.S.A.), le condensat d'une mole de nonyl-phénol et de dix moles d'oxyde d'éthylène vendu sous le nom Arkopal N 100 par HOECHST (Allemagne), le digluconate de chlorhexidine vendu sous le nom Arlacide G par ICI (Grande-Bretagne) et le chlorure de didodécyl-diméthyl-ammonium vendu sous le nom Adogen 462 par SHEREX CHEMICAL Co. (U.S.A.) ;
- comme insecticides, le d-cis.trans chrysanthémate de 3-phénoxy-benzyl vendu sous le nom Sumithrin par SUMITOMO (Japon), la néopynamine de SUMITOMO, le butoxyde de pipéronyle, le d-phénothrin et le tétraméthrin ;
- comme bactéricides, le chlorure de para-diisobutylphénoxy-ethoxyethyl-diméthylbenzylammonium vendu sous le nom Hyamine 1622 par ROHM & HAAS (U.S.A.), le palmityl-triméthyl-ammonium vendu sous le nom Variquat E 228 par SHEREX (U.S.A.), le méthoxysulfate de dialkylammonium vendu sous le nom Stepantex Q 185 par STEPAN (U.S.A.) ;
- comme fongicides, le chlorure de di-stéaryl-diméthyl-ammonium vendu sous le nom Arosurf TA-100 par SHEREX (U.S.A.) et le chlorure de benzyl-triméthyl-ammonium vendu sous le nom de Variquat B 200 par SHEREX (U.S.A.) ;
- comme agents lustrants, le Céraphyl 28 (céthyllactate), le Céraphyl IPL (linoléate d'isopropyle) et le Emulsynt GDL (bilaurate de glycéryle) de MALLINCKRODT (U.S.A.) ;
- comme agents antistatiques, démêlants et adoucissants, le Céraphyl 65 (chlorure d'amidopropyl-diméthyl-2-hydroxyéthyl-ammonium d'acides gras d'huile de vison), le Céraphyl 70 (sel d'ammonium quaternaire de biacide amide) et le Céraphyl 85 (tosylate d'ammonium) de MALLINCKRODT (U.S.A.), le Stepanquat 6585 (métho-sulfate de dialkyl-éthoxyméthyle) de STEPAN (U.S.A.) ;

- comme parfum, le 10.164 (numéro de référence) de SYNAROME (France) et comme solvant le Napsol PM1 (monopropylèneglycol-monoéthylether) de BP.

Des exemples de formulations du produit de nettoyage et d'assainissement sont donnés dans le Tableau I ci-après :

Tableau I
Composition en % en poids

| Composants | Exemples n° 1 | 2 | 3 | 4 | 5 | 6 | 7 | 8 |
|---|---|---|---|---|---|---|---|---|
| Oxyde de dodécyl-amidopropyl-diméthylamine | 0,5 | 0,5 | 0,4 | 0,4 | 0,5 | 0,5 | 0,4 | 0,5 |
| Acide dodécylamidopropyl N-diméthylaminoacétique | 1,4 | 1,2 | 1,5 | 0,3 | 0,4 | 1,1 | 1,5 | 1,4 |
| Chlorure d'acétyl-diméthyl-dodécoylammonium, sel de sodium | | | | 1,2 | | | | |
| Condensat 1 mole nonylphénol + 10 moles oxyde d'éthylène | 0,3 | 0,3 | | 0,2 | 0,4 | 0,3 | 0,3 | 0,2 |
| Digluconate de chlorhexidine | 0,08 | | 0,1 | 0,1 | 0,05 | 0,1 | 0,1 | 0,1 |
| Chlorure de didodécyl-diméthyl-ammonium | | 0,2 | | | | | | 0,2 |
| Chlorure d'amidopropyl-diméthyl-2-hydroxyéthyl ammonium, d'acides gras d'huile de vison | | | | | 1,3 | 0,2 | | |
| Linoléate d'isopropyle | | | | | | 0,7 | | |
| d-cis,trans chrysanthémate de 3-phénoxybenzyl | | | | | | | 0,4 | 0,4 |
| Néopynamine | | | | | | | | 0,1 |
| parfum | 0,3 | 0,3 | 0,3 | 0,2 | 0,3 | 0,1 | 0,3 | 0,3 |
| éthanol | 15 | 10 | 18 | 16 | 18 | 20 | 18 | 18 |
| isopropanol | 8 | 8 | 6 | 8 | 8 | 8 | 7 | 8 |
| monopropylèneglycol-monométhyléther | | | | | | | | |
| eau déminéralisée | 74,42 | 79,5 | 73,7 | 73,6 | 71,05 | 69 | 72 | 70,8 |

5

Le nettoyage des animaux à poils et, en particulier, le toilettage d'animaux de compagnie comprend plusieurs phases liées à la configuration du corps des animaux :
- le nettoyage de leur pelage, qui s'adresse à des surfaces généralement ondulées ;
- le nettoyage de leurs pattes (et plus particulièrement du dessous des pattes), comportant dans ce dernier cas des surfaces arrondies et des surfaces creuses ;
- le nettoyage de leurs oreilles (et principalement de l'intérieur de celles-ci) qui s'effectue dans des cavités tourmentées et parfois exigues.

Le procédé suivant l'invention pour nettoyer des animaux à poils consiste à frotter les poils à nettoyer à l'aide d'un support libérant un produit suivant l'invention de manière à détacher, émulsionner ou dissoudre des salissures présentes sur des poils et à frotter ensuite lesdits poils au moyen d'un support absorbant ou adsorbant de manière à éliminer lesdites salissures.

Au cours de l'opération de nettoyage rapide du corps des animaux de compagnie, selon le procédé conforme à l'invention, il s'exerce sur les poils et la peau de l'animal d'une part, une action physico-chimique de décollement et de solubilisation des salissures par les composants du produit de nettoyage et d'assainissement, et d'autre part une action mécanique de frottement, due au va-et-vient du support de nettoyage actionné par le mouvement de la main de l'opérateur.

Le support de nettoyage présente l'avantage de libérer facilement, au cours de l'opération de toilettage, le produit de nettoyage et d'assainissement au niveau de la robe des animaux, et d'absorber, durant la même opération, les salissures hydrosolubles dans son réseau de fibres constitutives, et d'adsorber à sa surface les salissures non hydrosolubles.

Un grand avantage apporté par le procédé selon l'invention réside dans le fait qu'il ne risque pas de dessécher la peau et les poils des animaux, car une partie des corps gras se trouvant naturellement sur ces parties du corps, même si elle se trouve émulsionnée dans le produit de nettoyage et d'assainissement reste sur la peau et le poil, ce produit n'étant pas réabsorbé entièrement, à l'issue du toilettage, par le support absorbant. A cette redistribution-tampon de corps gras s ajoute en l'occurence l'apport spécifique de substances protectrices du poil et de la peau que peut contenir le produit de nettoyage et d'assainissement, substances telles que, par exemple, les dérivés de l'huile de vison et/ou les esters d'acides gras saturés et de polyglycols de faibles poids moléculaires.

Cet avantage se traduit entre autres visuellement par l'obtention d'un pelage doux et brillant, beaucoup plus doux et plus brillant que lorsque l'on utilise les shampooings traditionnels employées en dilution aqueuse.

Les performances particulières du procédé selon l'invention ont été mises en évidence au cours des essais décrits ci-après, qui ont permis de comparer les résultats obtenus par l'application du procédé selon l'invention aux résultats obtenus avec des shampooings traditionnels (shampooings liquides à utiliser au cours de lavages à l'eau et shampooings en poudre dits shampooings secs).

## ESSAI n° 1

Cet essai a pour but de comparer le lustre et l'aspect du poil de chiens ayant subi l'application du procédé de toilettage conforme à la présente invention et un lavage avec un shampooing liquide et un nettoyage avec un shampooing sec traditionnels.

De gros chiens ont été choisis pour cet essai, chacun d'eux présentant impérativement un pelage d'aspect et de teinte aussi uniforme que possible.

Ces chiens n'avaient subi aucun lavage ou nettoyage depuis deux mois au moins.

Après un contrôle réflectométrique effectué sur toutes les parties de la robe des chiens, afin de vérifier que celle-ci présente bien une valeur réflectométrique ou de brillance uniforme, le pelage a été divisé en quatre parties, chacune d'elles destinée à l'application de l'un des produits cités.

On sait que le pelage d'un chien se ternit en se salissant et qu'un nettoyage lui redonne du brillant, à condition que ce nettoyage ne soit pas trop dégraissant.

La brillance des robes des animaux a été mesurée avant et après les traitements respectifs de nettoyage.

L'appareil utilisé à cet effet était un brillancemètre photoélectrique du Dr. Lange, construit par la Société ERICHSEN, à Hemer-Sundwig (Allemagne Fédérale).

Le support suivant l'invention utilisé dans cet essai pour l'application du procédé de toilettage rapide des animaux de compagnie était le suivant :

Le support avait la forme d'un gant sans doigts constitué de deux faces, dont la face inférieure était constituée d'un textile non-tissé en fibres multidirectionnelles en coton et polyester, de 120 grammes par mètre carré, et la face supérieure d'un textile non-tissé en fibres multidirectionnelles en coton et polyester,

6

de 50 grammes par mètre carré. Ces deux surfaces étaient liées l'une à l'autre sur leur pourtour, par soudure au moyen d'un matériau thermoadhésif.

Le support a été impregné à raison de 30 grammes de produits de nettoyage et d'assainissement, selon un taux d'emport de 375 %, la composition dudit produit étant celle de l'exemple 8 (voir Tableau I).

Le pouvoir nettoyant et lustrant du support, appliquant le procédé de toilettage rapide des animaux de compagnie, conforme à l'invention, a été comparé au pouvoir nettoyant et lustrant de deux shampooings liquides (a)et (b) et d'un shampooing en poudre (dit shampooing sec) pour chiens, que l'on rencontre sur le marché.

Les valeurs réflectométriques ainsi obtenues ont été consignées dans le Tableau II suivant :

<u>Tableau II</u>

VALEURS REFLECTOMETRIQUES

| | | Shampooing Liquide (a) | Shampooing Liquide (b) | Shampooing en Poudre | Support de toilettage suivant l'invention |
|---|---|---|---|---|---|
| Chien n° 1 (Berger allemand) | avant toilettage | 35 | 31 | 32 | 32 |
| | après toilettage | 52 | 51 | 45 | 63 |
| Chien n° 2 (Pointer) | avant toilettage | 24 | 26 | 25 | 25 |
| | après toilettage | 47 | 48 | 42 | 60 |
| Chien n° 3 (Braque) | avant toilettage | 28 | 30 | 26 | 27 |
| | après toilettage | 49 | 48 | 45 | 59 |
| Chien n° 4 (Epagneul) | avant toilettage | 31 | 29 | 31 | 30 |
| | après toilettage | 46 | 48 | 44 | 61 |
| Chien n° 5 (Cocker) | avant toilettage | 29 | 28 | 29 | 29 |
| | après toilettage | 51 | 50 | 48 | 62 |

Ces résultats montrent que l'utilisation du procédé de toilettage rapide conforme à l'invention conduit à un meilleur nettoyage et confère un meilleur lustre au pelage des animaux de compagnie.

**ESSAI n° 2**

Cet essai est destiné à comparer la durée moyenne totale du nettoyage (shampooinage classique et toilettage selon le procédé de l'invention) du pelage des animaux de compagnie, et des conditions d'exécution.

L'application de shampooings traditionnels (liquide et poudre) est réalisée en suivant les modes d'emploi préconisés par les fabricants.

Pour les shampooings liquides, le mode d'emploi général est le suivant :
- on mouille le pelage de l'animal avec de l'eau ;
- on répand le shampooing liquide en fin filet sur le pelage en une proportion telle que l'on puisse obtenir une mousse abondante en frottant le pelage ;
- on rince à l'eau ;
- on répand du shampooing et on frotte, à nouveau ;
- on rince abondamment à l'eau, et
- on sèche éventuellement avec un linge sec.

Le mode d'emploi général d'un shampooing en poudre est le suivant :
- on répand à rebrousse-poil le shampooing en poudre sur le corps de l'animal ;
- on frictionne énergiquement l'animal avec les mains ;
- on laisse la poudre agir pendant 10 minutes, et
- on élimine la poudre au mieux en peignant le pelage avec une brosse.

On a utilisé, dans le cas de l'application du procédé conforme à l'invention, le support décrit dans l'essai n° 1. Le mode d'emploi du procédé suivant l'invention a été le suivant :
- un opérateur a placé sa main dans le support ;
- il a commencé par passer doucement sur toutes les parties du corps de l'animal l'une des faces du support en forme de gant, de manière à répartir uniformément le produit qui l'imprègne. Ensuite, il a frotté énergiquement pour effectuer le nettoyage.
- il a retourné le support en forme de gant sans doigts et a frotté une dernière fois le corps de l'animal avec la face restée propre, en terminant par le sexe et le derrière.

Les durées moyennes du nettoyage proprement dit du corps des animaux de compagnie et les durées subséquentes du séchage de leur robe, ainsi que les observations relatives aux avantages ou inconvénients inhérents à chaque catégorie de produit utilisé, sont données dans le tableau III ci-dessous :

Tableau III

| Produit utilisé. | Nature du pelage du chien. | Durée moyenne du nettoyage. | Durée subséquente moyenne du séchage du pelage. | | Observations |
|---|---|---|---|---|---|
| | | | sans essuyage. | essuyage avec un linge sec. | |
| Shampooing liquide (a) | Poil court | 12 minutes | 55 minutes | 30 minutes | Difficulté de maintenir l'animal en place. Rinçages abondants nécessaires. Ébrouages fréquents et prolongés de l'animal lorsqu'on ne l'essuie pas (par temps chaud par exemple) et souvent durant le frottage pour l'obtention de la mousse. |
| | Poil long | 18 minutes | 1 heure et 20 minutes. | 40 minutes | |
| Shampooing liquide (b) | Poil court | 11 minutes | 50 minutes | 25 minutes | idem |
| | Poil long | 18 minutes | 1 heure et 15 minutes. | 40 minutes | |
| Shampooing en poudre (c) | Poil court | 20 minutes | | | Production de poussière. Attente pour permettre à la poudre d'agir. Nécessité de bien brosser pour éliminer la poudre, sinon le pelage reste terne. |
| | Poil long | 28 minutes | | | |
| Dispositif de l'Exemple n° 9 | Poil court | 2 minutes | 15 minutes | inutile | Application aisée du dispositif sur le corps du chien. L'animal accepte de bonne grâce le traitement. Aucun apport d'eau ni rinçage. Aucune gêne pour l'utilisateur ni nuisance pour l'environnement (ni ébrouage ni poussière). |
| | Poil long | 3 minutes | 20 minutes | inutile | |

Ces résultats montrent que le procédé de toilettage des animaux de compagnie selon la présente invention s'applique d'une manière simple et rapide, qu'il est bien accepté par l'animal, qu'il ne nécessite aucune intervention supplémentaire et qu'il n'apporte aucun désagrément tel que formation de poussières ou d'éclaboussures d'eau, par exemple.

Il est évident que les exemples d'application de l'invention énoncés ci-dessus, n'ont aucun caractère limitatif et que l'on pourrait imaginer des variantes, perfectionnements de détails et emplois d'équivalents

EP 0 367 744 B1

sans pour cela sortir du cadre de l'invention.

Dans le procédé de nettoyage suivant l'invention, aucun apport d'eau n'est nécessaire. De plus il n'est pas nécessaire de rincer ou d'essuyer le corps des animaux, les poils humectés ou à peine mouillés sèchent rapidement sans intervention complémentaire.

Le procédé de toilettage ou de nettoyage selon la présente invention consiste donc à frotter durant quelques instants le corps ou une partie du corps des animaux de compagnie (pelage, tête, pattes, oreilles, etc...) avec un support de nettoyage imprégné d'un produit de nettoyage et de lustrage non toxique, pouvant également présenter des propriétés assainissantes mais non toxiques, par exemple bactéricides et/ou insecticides. Le support de nettoyage épouse de préférence la forme d'une main lorsqu'il s'agit du toilettage de toutes les parties du corps à l'exception de l'intérieur des oreilles, et la forme d'un doigtier lorsqu'il s'agit du nettoyage de l'intérieur des oreilles.

**Revendications**

1. Produit nettoyant destiné à être appliqué sur un support pour nettoyer des animaux à poils par frottement ou glissement dudit support sur les poils à nettoyer, une partie (2) dudit support étant capable de libérer le produit nettoyant de manière à détacher, émulsionner ou dissoudre des salissures présentes sur des poils pour amener ces salissures dans un état permettant de les éliminer sur un support absorbant ou adsorbant, ledit produit nettoyant contenant au moins une substance tensio-active, caractérisé en ce que ledit produit est une composition aqueuse contenant une substance tensio-active non ionique, une substance tensio-active amphotérique et éventuellement une substance tensio-active cationique, la teneur en substances tensio-actives dans la composition étant de 0,05 à 10 % en poids.

2. Produit suivant la revendication 1, caractérisé en ce qu'il contient 0,05 à 30 % en poids d'adjuvant.

3. Produit suivant la revendication 2, caractérisé en ce que les adjuvants sont choisis parmi les :
   - parfums,
   - solvants,
   - microbicides,
   - fongicides,
   - insecticides,
   - agents antistatiques,
   - agents démêlants,
   - agents adoucissants,
   - agents lustrants,
   - agents revitalisants dermiques et capillaires.

4. Produit suivant la revendication 3, caractérisé en ce que les solvants sont choisis parmi les composés hydroxylés aliphatiques, les mono et diéthers.

5. Produit suivant la revendication 4, caractérisé en ce que les solvants sont choisis parmi l'éthanol, l'isopropanol, le monopropylèneglycol-monométhyléther et leurs mélanges.

6. Produit suivant la revendication 5, caractérisé en ce qu'il contient de 18 à 28 % de solvants.

7. Produit suivant l'une quelconque des revendications précédentes, caractérisé en ce qu'il contient une substance choisie parmi les dérivés de l'huile de vison et les esters d'acides gras saturés et de polyglycols de faibles poids moléculaires.

8. Produit suivant l'une quelconque des revendications 1 à 6, caractérisé en ce qu'il contient 0,8 % d'agent tensio-actif non ionique, 1,4 % d'agent tensio-actif amphotérique, 15 % d'isopropanol, et 8 % de monopropylèneglycol monométhyléther.

9. Produit suivant l'une quelconque des revendications 1 à 6, caractérisé en ce qu'il contient 0,8 % d'agent tensio-actif non ionique, 1,2 % d'agent tensio-actif amphotérique, 0,2 % d'agent tensio-actif cationique, 10 % d'isopropanol, et 8 % de monopropylèneglycol monométhyléther.

**10.** Produit suivant l'une quelconque des revendications 1 à 6, caractérisé en ce qu'il contient 0,4 % d'agent tensio-actif non ionique, 1,5 % d'agent tensio-actif amphotérique, 18 % d'isopropanol, et 6 % de monopropylèneglycol monométhyléther.

**11.** Produit suivant l'une quelconque des revendications 1 à 6, caractérisé en ce qu'il contient 0,6 % d'agent tensio-actif non ionique, 0,3 % d'agent tensio-actif amphotérique, 16 % d'éthanol, et 8 % de monopropylèneglycol monométhyléther.

**12.** Produit suivant l'une quelconque des revendications 1 à 6, caractérisé en ce qu'il contient 0,9 % d'agent tensio-actif non ionique, 0,4 % d'agent tensio-actif amphotérique, 18 % d'isopropanol, et 8 % de monopropylèneglycol monométhyléther.

**13.** Produit suivant l'une quelconque des revendications 1 à 6, caractérisé en ce qu'il contient 0,8 % d'agent tensio-actif non ionique, 1,1 % d'agent tensio-actif amphotérique, 20 % d'éthanol, et 8 % de monopropylèneglycol monométhyléther.

**14.** Produit suivant l'une quelconque des revendications 1 à 6, caractérisé en ce qu'il contient 0,7 % d'agent tensio-actif non ionique, 1,5 % d'agent tensio-actif amphotérique, 18 % d'isopropanol, et 7 % de monopropylèneglycol monométhyléther.

**15.** Produit suivant l'une quelconque des revendications 1 à 6, caractérisé en ce qu'il contient 0,7 % d'agent tensio-actif non ionique, 1,4 % d'agent tensio-actif amphotérique, 0,2 % d'agent tensio-actif cationique, 18 % d'éthanol et 8 % de monopropylèneglycol monométhyléther.

**16.** Produit suivant l'une quelconque des revendications précédentes, caractérisé en ce que la substance tensio-active non ionique est choisie parmi les produits de condensation d'un oxyde d'alkylène sur les alkylphénols, sur les alcools gras à poids moléculaire élevé, sur les acides gras, sur les amides gras, de préférence parmi les oxydes d'alkyldiméthylamine et les oxydes d'alkylamidopropyldiméthylamine.

**17.** Produit suivant l'une quelconque des revendications précédentes, caractérisé en ce que la substance tensio-active amphotérique est choisie parmi :
- les dérivés de l'acide N-alkyl-aminobutyrique, tels que les sels de sodium de l'acide N-alkyl-amino-butyrique,
- les dérivés de l'acide N-alkyl-aminopropionique, tels que les sels de potassium de l'acide alkyl-amino-propionique, et
- les dérivés du type bétaïnique, tels que les alkyl-bétaïnes, les alkylamidobétaïnes, les diméthyl-alkyl-amino-bétaïnes, les amopholytes à base imidazoline.

**18.** Produit suivant l'une quelconque des revendications précédentes, caractérisé en ce que la substance tensio-active cationique est choisie parmi les halogénures et les méthyl- ou méthoxysulfates de monométhyltrialkylammonium, de diméthyldialkylammonium, de triméthylmonoalkylammonium, de diméthylalkylbenzylammonium, de dialkylméthylbenzylammonium, les dérivés d'imidazolium et les complexes diquaternaires tels que les dihalogénures d'alkylpentaméthylpropanediammonium et les chlorhy-drates, nitrates, sulfates, acétates et gluconates de 1,6-di-(4-chloro-phényldiguanido)-hexane.

**19.** Procédé de nettoyage d'animaux à poils dans lequel on frotte les poils à nettoyer à l'aide d'un support libérerant un produit suivant l'une quelconque des revendications 1 à 18, de manière à détacher, émulsionner ou dissoudre des salissures présentes sur des poils et dans lequel on frotte ensuite lesdits poils au moyen d'un support absorbant ou adsorbant de manière à éliminer lesdites salissures.

**20.** Gant ou moufle pour la mise en oeuvre du procédé suivant la revendication 19, comprenant au moins une partie (2) capable de libérer au moins un produit suivant l'une quelconque des revendications 1 à 18, et éventuellement une partie (3) capable d'absorber ou d'adsorber des salissures, caractérisé en ce que le gant ou moufle présente au moins une face (5) constituée de deux feuilles (9,10) entre lesquelles s'étend au moins une couche (11) contenant au moins un produit suivant l'une quelconque des revendications 1 à 18.

**Claims**

1. Cleaning product intended to be applied on a support for cleaning animals with hairs by scrubbing or sliding the said support on the hairs to be cleaned, a part (2) of said support being able to release a cleaning product for loosing, emulsifying or dissolving smears present on the hairs so as to convert said smears into a form suitable for their removal by an absorbing or adsorbing support, the said cleaning product containing at least a surface-active agent, characterized in that the said product is an aqueous composition containing a non-ionic surface-active agent, an amphoteric surface-active agent and possibly a cationic surface-active agent, the weight content of said surface-active agents in the composition being 0.05 to 10 %.

2. Product according to claim 1, characterized in that it contains for 0.05 to 30 % by weight additive.

3. Product according to claim 2, characterized in that the additives are selected among :
   - perfumes,
   - solvents,
   - antimicrobial agents,
   - fungicides,
   - insecticides,
   - antistatic agents,
   - unravel agents,
   - softening agents,
   - lustring agents,
   - agents for the derm and capillary revitalizing.

4. Product according to claim 3, characterized in that the solvents are selected among the hydroxylated aliphatic compounds, the monoethers and the diethers.

5. Product according to claim 4, characterized in that the solvents are selected among ethanol, isopropanol, monopropyleneglycol-monomethylether and the mixtures thereof.

6. Product according to claim 5, characterized in that it contains from 18 to 28 % solvents.

7. Product according to anyone of the preceding claims, characterized in that it contains a compound selected among vison oil derivatives and the esters of saturated fatty acids and polyglycols with low molecular weight.

8. Product according to anyone of the claims 1 to 6, characterized in that it contains 0.8 % non-ionic surface-active agent, 1.4 % amphoteric surface-active agent, 15 % isopropanol and 8 % monopropyleneglycol-monomethylether.

9. Product according to anyone of the claims 1 to 6, characterized in that it contains 0.8 % non-ionic surface-active agent, 1.2 % amphoteric surface-active agent, 0.2 % cationic surface-active agent, 10 % isopropanol and 8 % monopropyleneglycol-monomethylether.

10. Product according to anyone of the claims 1 to 6, characterized in that it contains 0.4 % non-ionic surface-active agent, 1.5 % amphoteric surface-active agent, 18 % isopropanol and 6 % monopropyleneglycol-monomethylether.

11. Product according to anyone of the claims 1 to 6, characterized in that it contains 0.6 % non-ionic surface-active agent, 0.3 % amphoteric surface-active agent, 16 % ethanol and 8 % monopropyleneglycol-monomethylether.

12. Product according to anyone of the claims 1 to 6, characterized in that it contains 0.9 % non-ionic surface-active agent, 0.4 % amphoteric surface-active agent, 18 % isopropanol and 8 % monopropyleneglycol-monomethylether.

13

13. Product according to anyone of the claims 1 to 6, characterized in that it contains 0.8 % non-ionic surface-active agent, 1.1 % amphoteric surface-active agent, 20 % ethanol and 8 % monopropyleneglycol-monomethylether.

14. Product according to anyone of the claims 1 to 6, characterized in that it contains 0.7 % non-ionic surface-active agent, 1.5 % amphoteric surface-active agent, 18 % isopropanol and 7 % monopropyleneglycol-monomethylether.

15. Product according to anyone of the claims 1 to 6, characterized in that it contains 0.7 % non-ionic surface-active agent, 1.4 % amphoteric surface-active agent, 0.2 % cationic surface-active agent, 18 % ethanol and 8 % monopropyleneglycol-monomethylether.

16. Product according to anyone of the preceding claims, characterized in that the non-ionic surface-active agent is selected among the products obtained from the condensation of an alkyl oxide with alkylphenols, fatty alcohols with a high molecular weight, fatty acids, fatty amides, preferably among the oxides of alkyldimethylamine and the oxides of alkylamidopropyldimethylamine.

17. Product according to anyone of the preceding claims, characterized in that the amphoteric surface-active agent is selected among :
   - the derivatives of the N-alkyl-aminobutyric acid, such as the sodium salts of N-alkyl-aminobutyric acid,
   - the derivatives of the N-alkyl-aminopropionic acid, such as the potassium salts of alkyl-aminopropionic acid, and
   - the derivatives of the betaine type, such as the alkylbetaines, the alkylamidobetaines, the dimethylalkylaminobetaines, the amopholytes with an imidazoline base.

18. Product according to anyone of the preceding claims, characterized in that the cationic surface-active agent is selected among the halide and methyl or methoxysulfates of monomethyltrialkylammonium, dimethyldialkylammonium, trimethylmonoalkylammonium, dimethylalkylbenzylammonium, dialkylmethylbenzylammonium, the imidazolium derivatives and the diquaternary complexes such as the alkylpentamethylpropanediammonium dihalides and the chlorhydrates, nitrates, sulfates, acetates and gluconates of 1,6-di-(4-chloro-phenyldiguanido)-hexane.

19. Process for cleaning animals with hairs, in which the hairs to be cleaned are scrubbed with a support releasing a product according to anyone of the claims 1 to 18, so as to loosen, emulsify and dissolve smears present on the hairs and in which the hairs are thereafter scrubbed with an absorbing or adsorbing support so as to remove said smears.

20. Glove or muffler for the working of the process according to claim 19, comprising at least a part (2) able to release at least a product according to anyone of the claims 1 to 18, and possibly a part (3) able to absorb or adsorb smears, characterized in that the glove or muffler has at least a face (5) consisting of two sheets (9,10) between which there is at least one layer (11) containing at least a product according to anyone of the claims 1 to 18.

**Patentansprüche**

1. Reinigungsprodukt, das dazu bestimmt ist, auf einem Träger aufgebracht zu werden, zur Reinigung von behaarten Tieren durch Reiben oder Gleiten dieses Trägers auf den zu reinigenden Haaren, wobei ein Bereich (2) dieses Trägers in der Lage ist, ein Reinigungsprodukt in einer ablösenden Weise freizusetzen, so daß die vorhandenen Beschmutzungen auf den Haaren emulgiert oder aufgelöst werden, damit diese Beschmutzungen in einen Zustand überführt werden, der es erlaubt, diese auf einem aufsaugenden Träger oder mittels eines Adsorptionsmittels zu entfernen, wobei dieses Reinigungsprodukt mindestens eine oberflächenaktive Substanz enthält, dadurch gekennzeichnet, daß das Produkt eine wäßrige Zusammensetzung ist, die eine nichtionische, eine amphotere und gegebenenfalls eine kationische oberflächenktive Substanz enthält, wobei der Gehalt der oberflächenaktiven Substanzen in dieser Zusammensetzung 0,05 bis 10 Gew.-% beträgt.

2. Produkt nach Anspruch 1, dadurch gekennzeichnet, daß es 0,05 bis 30 Gew.-% Zusatzmittel enthält.

3. Produkt nach Anspruch 2, dadurch gekennzeichnet, daß das Zusatzmittel ausgewählt wird aus:
   - Geruchsstoffen,
   - Lösungsmitteln,
   - Mikrobiziden,
   - Fungiziden,
   - Insektiziden,
   - antistatischen Mitteln,
   - auflockernden Mitteln,
   - Weichmachern,
   - Glanzmitteln,
   - Mitteln zur Haut- und Kapillarrevitalisierung.

4. Produkt nach Anspruch 3, dadurch gekennzeichnet, daß die Lösungsmittel ausgewählt werden aus hydroxylischen aliphatischen Zusammensetzungen und den Mono- und Diethern.

5. Verfahren nach Anspruch 4, dadurch gekennzeichnet, daß die Lösungsmittel ausgewählt werden aus Ethanol, Isopropanol, Monopropylenglykol-monomethylether und deren Mischungen.

6. Produkt nach Anspruch 5, dadurch gekennzeichnet, daß dieses 18 bis 28 % Lösungsmittel enthält.

7. Produkt nach einem der vorstehenden Ansprüche, dadurch gekennzeichnet, daß es eine Substanz enthält, die ausgewählt ist aus den Derivaten des Nerzöles und den gesättigten Fettsäureestern und den Polyklykolen mit niedrigem Molekulargewicht.

8. Produkt nach einem der Ansprüche 1 bis 6, dadurch gekennzeichnet, daß es enthält 0,8 % nicht-ionisches oberflächenaktives Mittel, 1,4 % amphoteres oberflächenaktives Mittel, 15 % Isopropanol und 8 % Monopropylenglykol-monomethylether.

9. Produkt nach einem der Ansprüche 1 bis 6, dadurch gekennzeichnet, daß es enthält 0,8 % nicht-ionisches oberflächenaktives Mittel, 1,2 % amphoteres oberflächenaktives Mittel, 0,2 % kationisches oberflächenaktives Mittel, 10 % Isopropanol und 8 % Monopropylenglykol-monomethylether.

10. Produkt nach einem der Ansprüche 1 bis 6, dadurch gekennzeichnet, daß es enthält 0,4 % nicht-ionisches oberflächenaktives Mittel, 1,5 % amphoteres oberflächenaktives Mittel, 18 % Isopropanol und 6 % Monopropylenglykol-monomethylether.

11. Produkt nach einem der Ansprüche 1 bis 6, dadurch gekennzeichnet, daß es enthält 0,6 % nicht-ionisches oberflächenaktives Mittel, 0,3 % amphoteres oberflächenaktives Mittel, 16 % Ethanol und 8 % Monopropylenglykol-monomethylether.

12. Produkt nach einem der Ansprüche 1 bis 6, dadurch gekennzeichnet, daß es enthält 0,9 % nicht-ionisches oberflächenaktives Mittel, 0,4 % amphoteres oberflächenaktives Mittel, 18 % Isopropanol und 8 % Monopropylenglykol-monomethylether.

13. Produkt nach einem der Ansprüche 1 bis 6, dadurch gekennzeichnet, daß es enthält 0,8 % nicht-ionisches oberflächenaktives Mittel, 1,1 % amphoteres oberflächenaktives Mittel, 18 % Isopropanol, 20 % Ethanol und 8 % Monopropylenglykol-monomethylether.

14. Produkt nach einem der Ansprüche 1 bis 6, dadurch gekennzeichnet, daß es enthält 0,7 % nicht-ionisches oberflächenaktives Mittel, 1,5 % amphoteres oberflächenaktives Mittel, 18 % Isopropanol und 7 % Monopropylenglykol-monomethylether.

15. Produkt nach einem der Ansprüche 1 bis 6, dadurch gekennzeichnet, daß es enthält 0,7 % nicht-ionisches oberflächenaktives Mittel, 1,4 % amphoteres oberflächenaktives Mittel, 0,2 % kationisches oberflächenaktives Mittel, 18 % Ethanol und 8 % Monopropylenglykol-monomethylether.

16. Produkt nach einem der vorstehenden Ansprüche, dadurch gekennzeichnet, daß die nicht-ionische oberflächenaktive Substanz ausgewählt ist aus den Kondensationsprodukten eines Alkylenoxids mit den Alkylphenolen, mit den Fettalkoholen eines erhöhten Molekulargewichts, mit den Fettsäuren, mit den Fettamiden, vorzugsweise aus den Oxiden des Alkyldimethylamins und den Oxiden des Alkylamidopropyldimethylamins.

17. Produkt nach einem der vorstehenden Ansprüche, dadurch gekennzeichnet, daß die amphotere oberflächenaktive Substanz ausgewählt ist aus:
- den Derivaten der N-Alkyl-aminobuttersäure, wie die Natriumsalze der N-Alkyl-aminobuttersäure,
- den Derivaten der N-Alkyl-aminopropionsäure, wie die Kaliumsalze der Alkyl-aminopropionsäure, und
- den betainartigen Derivaten, wie die Alkylbetaine, die Alkylamidobetaine, die Dimethylalkyl-aminobetaine, die Ampholyte auf Imidazolinbasis.

18. Produkt nach irgendeinem der vorstehenden Ansprüche, dadurch gekennzeichnet, daß die kationische oberflächenaktive Substanz ausgewählt ist aus den Halogeniden und den Methyl- oder Methoxysulfaten des Monomethyltrialkylammoniums, des Dimethyldialkylammoniums, des Trimethylmonoalkylammoniums, des Dimethylalkylbenzylammoniums, des Dialkylmethylbenzylammoniums, den Imidazolderivaten und den diquaternären Komplexen, wie den Alkylpentamethylpropandiammoniumdihalogeniden und den Chlorhydraten, Nitraten, Sulfaten, Acetaten und Glukonaten des 1,6-Di-4-chlor-phenyldiguanidohexans.

19. Verfahren zur Reinigung behaarter Tiere, wobei die Haare zur Reinigung abgerieben werden mittels eines Trägers, der ein Produkt freisetzt, nach irgendeinem der Ansprüche 1 bis 18, wobei dieses so freigesetzt wird, daß es die auf den Haaren vorhandenen Beschmutzungen emulgiert oder auflöst und wobei man dann die Haare mittels eines aufsaugenden Trägers oder eines Adsorptionsmittels in einer solchen Weise abreibt, daß die Beschmutzungen entfernt werden.

20. Handschuh oder Fausthandschuh zur Durchführung eines Verfahrens nach Anspruch 19, der mindestens einen Bereich (2) aufweist, der befähigt ist, mindestens ein Produkt nach einem der Ansprüche 1 bis 18 freizusetzen, und schließlich einen Bereich (3), der fähig ist, die Beschmutzungen aufzusaugen oder zu adsorbieren, dadurch gekennzeichnet, daß der Handschuh oder der Fausthandschuh mindestens eine Fläche (5) aufweist, die aus zwei Lagen (9, 10) besteht, zwischen denen sich mindestens eine Schicht (11) erstreckt, die mindestens ein Produkt nach einem der Ansprüche 1 bis 18 enthält.

FIG.1

FIG.2

FIG.3